Europäisches Patentamt

European Patent Office

Office européen des brevets

(19)

(11) Veröffentlichungsnummer: **0 316 713**
**A2**

## (12) EUROPÄISCHE PATENTANMELDUNG

(21) Anmeldenummer: 88118561.5

(22) Anmeldetag: 08.11.88

(51) Int. Cl.⁴: **F16H 1/32**

(30) Priorität: **13.11.87 DE 3738521**

(43) Veröffentlichungstag der Anmeldung:
**24.05.89 Patentblatt 89/21**

(84) Benannte Vertragsstaaten:
**CH DE FR GB IT LI SE**

(71) Anmelder: **Fickelscher, Kurt Gerhard**
**Herderstrasse 19**
**D-6710 Frankenthal(DE)**

(72) Erfinder: **Fickelscher, Kurt Gerhard**
**Herderstrasse 19**
**D-6710 Frankenthal(DE)**

(74) Vertreter: **Klose, Hans, Dipl.-Phys. et al**
**Kurfürstenstrasse 32**
**D-6700 Ludwigshafen(DE)**

(54) **Planetengetriebe.**

(57) Ein Planetengetriebe enthält zwei Zahnräder mit unterschiedlichen Zähnezahlen und ferner ein in radialer Richtung flexibles Planetenrad (12), das mit diesen Zahnrädern in Eingriff steht. Das Planetenrad (12) wird mittels einer Antriebsnocke (18) über ein Wälzlager (22) in Eingriffszonen in die Zahnlücken der Zahnräder hineingedrückt. Es soll mit geringem konstruktivem Aufwand die Aufgabe gelöst werden, die axiale Baulänge kurz zu halten und eine gleichmäßige Beaufschlagung zu gewährleisten, wobei die Untersetzung in einem großen Bereich wahlweise vorgegeben werden kann. Es wird vorgeschlagen, daß das flexible Planetenrad (12) eine Innenverzahnung (14) und eine Außenverzahnung (16) aufweist und teilweise in einem ringförmigen Spalt (10) zwischen einem Hohlrad (1) und einem Stirnrad angeordnet ist. Es sind über dem Umfang vier Eingriffszonen (42 - 45) vorhanden, in welchen das Planetenrad (12) mit dem Hohlrad (1) bzw. dem Stirnrad (6) kämmt.

Fig. 1

## Planetengetriebe

Die Erfindung bezieht sich auf ein Planetengetriebe gemäß den im Oberbegriff des Patentanspruchs 1 angegebenen Merkmalen.

Derartige Planetengetriebe sind koaxiale Getriebe, die vor allem als Harmonic-Drive-Getriebe (nachfolgend HD-Getriebe) oder als Gleitkeil-Getriebe (nachfolgend GK-Getriebe) ausgebildet sind. Aus der amerikanischen Zeitschrift "MACHINE DESIGN, 1960, Seiten 160-173" ist die grundsätzliche Bauart des HD-Getriebes bekannt, das ein innenverzahntes Hohlrad und ein im wesentlichen zylinderförmiges, dünnwandiges, außenverzahntes Planetenrad aufweist, welches als Flexspline bezeichnet wird. Das genannte flexible Planetenrad weist bei gleicher Zahnteilung zwei Zähne weniger als das Hohlrad auf. Das Planetenrad weist ferner eine Innenverzahnung auf, mit welcher ein außenverzahntes Sonnenrad kämmt. Es ist ein Nockenrad vorhanden, das ähnlich einer Ellipse ausgebildet ist und über ein entsprechend verformbares Wälzlager auf das flexible Planetenrad derart einwirkt, daß diametral gegenüberliegend eine Anzahl der Zähne des Planetenrades mit den Zähnen des Hohlrades kämmt. Die Verzahnung des Planetenrades wird von einer Antriebsnocke mit dem Sonnenrad einerseits und dem Hohlrad andererseits um einen Winkel versetzt in Eingriff gebracht. Die Antriebsnocke ist Bestandteil des scheibenförmigen Nockenades, welches axial beabstandet seitlich neben dem Sonnenrad angeordnet ist und einseitig wirkt. Die Kräfte wirken in axial beabstandeten Ebenen und vor allem das Planetenrad unterliegt hohen Beanspruchungen und erfordert einen hohen Fertigungsaufwand. Das Planetenrad wird nicht nur in radialer Richtung deformiert, sondern es ergeben sich in Folge des axialen Abstandes der Eingriffsebenen der Zahnräder zusätzliche Beanspruchungen, welche nachteilig für die Lebensdauer und Funktionssicherheit sind. Spätestens nach einer Drehung von 45° kommen die Zähne jeweils wieder außer Eingriff und aufgrund der elliptischen Ausgestaltung der Antriebsnocke, bzw. allgemein des Drehkörpers, findet im Eingriffsbereich ein Abwälzen statt. Das HD-Getriebe ermöglicht Untersetzungen im sinnvollen Bereich von i = 1:70 bis i = 1:300. Mit fallender Untersetzung wird die Anzahl der tragenden Zähne kleiner und folglich auch das übertragbare Drehmoment. Die Ovalisierung des Planetenrades, nämlich Durchmesser bei maximaler Verformung bezogen auf den Durchmesser ohne Verformung ist groß. Nachteilig ist darüber hinaus der hohe Fertigungsaufwand zwecks Erzielung einer spielarmen Ausgestaltung.

Ferner kann das HD-Getriebe als ein Flachgetriebe ausgebildet sein, welches kinematisch gleichartig aufgebaut ist und ein zweites Hohlrad zur Abstützung des Drehmomentes enthält. Dieses zweite Hohlrad weist die gleiche Zähnezahl wie das flexible Planetenrad auf, wobei jedoch die Zahnteilung großer ist, so daß das Drehmoment reduziert werden muß. Bedingt durch die Limitierung des Untersetzungsverhältnisses bei ca. i = 1:70 und ferner durch die hohen Fertigungskosten zur Erzielung der hohen Präzision beschränkt sich der Einsatz derartiger HD-Getriebe auf Roboter, Werkzeugmaschinen oder dergleichen.

Aus der US-PS 40 99 427 ist die als GK-Getriebe bezeichnete Bauart des Planetengetriebes bekannt. Es sind zwei innen-oder außenverzahnte Zahnräder bezüglich einer gemeinsamen Achse nebeneinander angeordnet, wobei eine Zähnezahldifferenz Delta z von zwei bzw. vier vorhanden ist. In axialer Richtung betrachtet ist eine Überlappung der Zähne der beiden Zahnräder vorhanden, so daß sogenannte virtuelle Zahnlücken entstehen, welche eine Differenz der Zähnezahlen von 2 nach einer Drehung um 180° und für eine Differenz der Zähnezahlen von 4 nach einer Drehung um 90° aus der Verzahnung herauslaufen. Hierbei ändern sich die Zahnteilung und Flankenwinkel in Abhängigkeit von der Übersetzung und der Zahntiefe. Ein flexibles Planetenrad greift radial in die virtuellen Zahnlücken, wobei beidseitig an den Flanken eine flächige Anlage besteht. Gegenüber den eingangs genannten HD-Getrieben sind zusätzliche Freiheitsgrade, bezogen auf die Teilungs- und Flankenwinkeländerung, vorgesehen. Das Planetenrad kann in einfacher Form aus einem zickzack-förmigen Zahnband bestehen, wodurch die Anpassung an die Flankenwinkel- und Teilungsänderung erfolgt. Die Zahnräder und das Planetenrad weisen jeweils eine andere Zahnteilung auf. Ferner kann die Anpassung durch Ausbildung als Stegzähne, schwenkbare Zähne bzw. Stegzähne mit leichter Krümmung erfolgen. Die Zähne des flexiblen Planetenrades schieben sich keilförmig mit beidseitigem Flankenkontakt in die virtuelle Zahnlücke der beiden axial nebeneinanderliegenden Zahnräder, und zwar mit konstanter radialer Geschwindigkeit. Die Form des Drehkörpers bzw. der Antriebsnocke wird durch halbkreisförmige Sektoren vorgegeben, welche um Beträge Delta x und Delta y vom Drehpunkt entfernt sind. Für große Übersetzungen kann auf zusätzliche Freiheitsgrade des flexiblen Planetenrades verzichtet werden; in einem vorgegebenen Eingriffsbereich werden eine mittlere Zahnteilung und ein mittlerer Flankenwinkel vorgegeben. Die Anzahl der miteinander kämmenden Zähne sind weitgehend unabhängig vom Übersetzungsverhältnis und wird durch die gewählten Freiheitsgrade bestimmt, so daß bis zu 60% der Zähne miteinander in Eingriff stehen. Mit einem GK-Getriebe können Drehmomente übertragen werden, welche um ein mehrfaches über den sonstigen Bauarten liegen. Vor allem für eine Zähnezahldifferenz von 4 ist das GK-Getriebe spielfrei, wobei keine nennenswerte Wälzbewegung stattfindet.

Infolge des beidseitigen Flächenkontaktes müssen die Zähne des Planetenrades bei der Umkehrung der Bewegungsrichtung entkuppelt werden, so daß sie beispielsweise in Richtung der y-Achse keinen beidseitigen Flächenkontakt haben. Die theoretische Tragfähigkeit wird hierdurch reduziert und besonders bei Stegzähnen ist eine hohe Fertigungsgenauigkeit zur Erzielung hoher Traganteile erforderlich. Für eine Zähnezahldifferenz von 4 lassen sich Untersetzungen bis i = 1:20 realisieren, wobei jedoch eine vergleichsweise große Verformung des flexiblen Planetenrades erfolgt. Andererseits läßt das GK-Getriebe Untersetzungen bis i = 300 zu. Für größere oder kleinere Untersetzungen als die genannten Werte können durch Ausbildung als ein Dreischeibengetriebe mit zwei unabhängig voneinander angetriebenen flexiblen Planetenrädern erzielt werden. Ferner können sich bei GK-Getrieben Nachteile dadurch ergeben, daß die Zähne des Planetenrades mittig auf Scherung beansprucht werden; auch können infolge Verformung vor allem bei hohen Drehmomenten Eingriffstörungen die Folge hiervon sein.

Planetengetriebe der beiden erläuterten Bauarten haben ferner den gemeinsamen Nachteil, daß eine nicht vermeidbare Mikrobewegung im Bereich der zylindrischen Bohrung des flexiblen Plantenrades und dem Außendurchmesser des Wälzlagers stattfindet. Bedingt durch Phasenstauchung und -streckung sowie nicht gänzlich vermeidbares Spiel tritt in dem genannten Bereich ein Schlupf auf, der zur trockenen Reibung führen kann. Ein Verschleiß kann nur durch höchste Oberflächenqualität vermieden werden. Das HD-Getriebe weist eine große axiale Baulänge auf und das HD-Flachgetriebe dient aus kinematischen Gründen zur Übertragung von relativ kleinen Drehmomenten. Beide Bauarten erfordern einen hohen Bauaufwand beim Einbau in Arbeitsmaschinen, wie z.B. Industrieroboter, Werkzeugmaschinen oder Getriebemotoren. Dieser hohe Bauaufwand für Flansche, Abtriebswelle, Zusatzgehäuse und Lagerungen führt zu Zusatzmassen, die in der Praxis um den Faktor 3 bis 4 größer sind als die Masse des Planetengetriebes. Hierdurch wird die Wettbewerbsfähigkeit gegenüber mehrwelligen und mehrstufigen stirnradverzahnten Planetengetrieben nachteilig beeinflußt. Insbesondere beim Einsatz in Industrierobotern mit schnellen Verstellbewegungen führen diese Zusatzmassen zu erheblichen Schwierigkeiten.

Hiervon ausgehend liegt der Erfindung die Aufgabe zugrunde, das Platentengetriebe der gattungsgemäßen Art dahingehend auszubilden, daß eine kompakte Bauweise und ein störungsarmer Bewegungsablauf erreicht werden. Auch sollen die Zylinderflächen des Lagers zwischen Antriebsnocke und Planetenrad möglichst gleichmäßig beaufschlagt werden, damit Rollen- und Nadellager eingesetzt werden können. Bei hohen Drehmomenten sollen kinematische Störungen vermieden werden und eine spielfreie Ausführung soll gewährleistet sein. Ferner soll das Getriebe mit geringem konstruktiven Aufwand Untersetzungen von i = 1:15 bis i = 1:unendlich ohne zusätzliche Getriebeelemente ermöglichen. Darüberhinaus soll zwischen dem flexiblen Planetenrad und dem deformierbaren Lager eine Trockenreibung vermieden werden. Das Getriebe soll mit einer reduzierten Ovalisierung eine hohe Funktionssicherheit aufweisen, wobei insbesondere Materialwechselbeanspruchungen des Planetenrades bzw. allgemein des Zahnringes sowie des Lagers bei einfacher Konstruktion reduziert werden sollen. Schließlich sollen bei der Fertigung keine besonderen und kostenintensive Anforderungen hinsichtlich Fertigungsgenauigkeit zu beachten sein und der Einbau soll ohne nennenswerte zusätzliche Stützkonstruktionen erfolgen können.

Die Lösung dieser Aufgabe erfolgt gemäß den im Kennzeichen des Patentanspruchs 1 angegebenen Merkmalen.

Das erfindungsgemäße Planetengetriebe zeichnet sich durch eine besonders einfache Konstruktion aus und erfordert nur einen geringen Platz- und Masseaufwand. Die ebenen Zahnflanken des Sonnenrades, des Planetenrades und des Hohlrades ermöglichen eine beschleunigungsfreie radiale Verschiebung der Zähne des Planetenrades. Die Haupteingriffszonen von Hohlrad und Stirnrad liegen um im wesentlichen 90° versetzt, so daß insgesamt vier entsprechend gegenüberliegende Eingriffsbereiche vorhanden sind. Ferner sind. Insbesondere innerhalb des doppeltverzahnten Planetenrades sind ein bevorzugt reibungsarmes Lager sowie die Antriebsnocken angeordnet, um weitgehend ähnlich dem Prinzip des GK-Getriebes die Radialverschiebung der Zähne zu bewirken. Zwischen dem Planetenrad und dem Sonnenrad ebenso wie dem Hohlrad ist mindestens eine Zähnezahldifferenz z = 2 vorhanden. Die Ovalisierung des Planetenrades ist im Vergleich mit einem GK-Getriebe für gleiche Untersetzung und Belastbarkeit bis zu 50 % geringer. Aufgrund der erheblich reduzierten Ovalisierung oder Deformation des Planetenrades sowie des Wälzlagers unterliegen diese erheblich reduzierten Materialwechselbeanspruchungen, Spannungsänderungen, Verschleiß, so daß das vorgeschlagene Getriebe sich durch eine hohe Funktionssicherheit und Lebensdauer auszeichnet. Eine Mikroreibung zwischen dem Planetenrad und dem Wälzlager kann weitgehend vermieden werden, so daß eine aufwendige Oberflächenbehandlung entfallen kann. Da Planetenrad kann mit erheblich reduziertem Aufwand gefertigt werden und örtliche Belastungsspitzen werden zuverlässig vermieden. Eine Relativbewegung zwischen Sonnenrad und Planetenrad wird bei einfacher Bauweise sowohl des Planetenrades als auch des Sonnenrades erreicht. Eine unterschiedliche Zähnezahl zwischen Sonnenrad und Planetenrad wird funktionssicher ermöglicht. Eine modulare Getriebestruktur, beispielsweise zwecks Änderung des Übersetzungsverhältnisses wird durch Austausch des Sonnenrades ermöglicht. Die reduzierte Ovalisierung des Planetenrades ergibt einen hohen Überdeckungsgrad und somit eine im Vergleich zu vorbekannten Planetengetrieben wesentlich reduzierte Belastung des einzelnen Zahnes. Die Mikrobewegung zwischen dem Wälzlager der Nockenscheibe und dem Planetenrad wird auf einen vernachlässigbaren Wert reduziert. Die Zähne des Planetenrades erfahren im Vergleich zu den vorbekannten Planetengetrieben eine erheblich reduzierte radiale Verschiebung. Bei Vermeidung von hohen Beschleunigungen bzw. Verzögerungen werden die Spannungswerte reduziert.

Das Planetengetriebe zeichnet sich ferner durch eine kompakte Bauweise und eine hohe Funktionssicherheit aus. Das Planetengetriebe ist hervorragend geeignet, um im Baukastensystem die verschiedenen Zahnräder einschließlich das Planetenrad zu fertigen. Durch geeignete Kombination mit jeweils anderen Rädern mit unterschiedlichen Zähnezahlen, jedoch im übrigen gleicher Verzahnungsgeometrie wird das gewünschte Untersetzungsverhältnis vorgegeben. So kann beispielsweise das Hohlrad und das Planetenrad beibehalten werden, um lediglich durch Austausch des Sonnenrades die Untersetzung um einen gewünschten Faktor zu verändern. Die Verzahnungen von Hohlrad und Sonnenrad werden bevorzugt in der gleichen Radialebene angeordnet, während das Nockenrad oder die Nockenscheibe axial neben einem dieser Räder, und zwar zweckmäßig in unmittelbarer Nähe desselben, angeordnet ist. Das Antriebs- oder Wälzlager weist im wesentlichen den gleichen Außendurchmesser wie das Sonnenrad oder den gleichen Innendurchmesser wie das Hohlrad auf und das Planetenrad übergreift axial sowohl das Wälzlager als auch das axial daneben angeordnete Zahnrad. Es sind zwei diametral einander gegenüberliegende Eingriffszonen des Planetenrades mit dem Hohlrad vorhanden. Ferner sind zwei ebenfalls diametral einander gegenüberliegende Eingriffszonen zwischen Zahnring bzw. Planetenrad und dem Sonnenrad vorhanden, wobei jedoch diese Eingriffszonen zu den erstgenannten Eingriffszonen im wesentlichen um 90° bezüglich der Zentralachse verdreht sind. Die Eingriffszonen werden mit dem Drehkörper bzw. Nockenrad vorgegeben, das entsprechende Nocken oder dergleichen aufweist. Die Eingriffszonen mit dem Hohlrad und mit dem Stirnrad können sich in Umfangsrichtung überlappen, wobei ein hoher Traganteil zuverlässig sichergestellt wird.

Weitere erfindungswesentliche Merkmale ergeben sich aus den in der Zeichnung dargestellten Ausführungsbeispielen. Es zeigen:

Fig. 1 einen axialen Schnitt durch das Getriebe,

Fig. 2 einen radialen Schnitt durch das flexible Planetenrad,

Fig. 3 vergrößert einen axialen Schnitt ähnlich den in Fig. 1

Fig. 4 einen Schnitt entlang Schnittlinie IV gemäß Fig; 1,

Fig. 5 - 9 Darstellungen zur Verdeutlichung der kinematischen und geometrischen Beziehungen des Getriebes,

Fig. 10 die Kräfte an einem einzelnen Zahn,

Fig. 11 einen radialen Schnitt durch eine Ausführungsform, bei welcher das Planetenrad in axialer Richtung vorstehende Zähne aufweist, die miteinander durch hier nicht dargestellte Stege verbunden sind,

Fig. 12 eine Ausführungsform, bei welcher das Planetenrad sowohl radial als auch in Umfangsrichtung flexibel ausgebildet ist,

Fig. 13 vergrößert einen Teilausschnitt ähnlich der Fig. 12,

Fig. 14 eine Ausführungsform ähnlich Fig. 1, jedoch mit einem Federring um das Planetenrad,

Fig. 15 eine Ausführungsform mit einem Außenring,

Fig. 16 eine Ausführungsform ähnlich Fig. 11,

Fig. 17 eine Ausführungsform ähnlich Fig. 1, mit einem flexibel angeordneten Hohlrad,

Fig. 18 einen Längsschnitt durch eine Ausführungsform mit einer elastischen Verbindung zwischen dem Planetenrad und einem Ring,

Fig. 19 eine besondere Ausgestaltung des Käfigs der Lagerung,

Fig. 20 eine Ausführungsform mit zwei Stirnrädern,

Fig. 21 eine besondere Ausgestaltung in Verbindung mit einem Getriebemotor,

Fig. 22 ein besonderes Einbaubeispiel für einen Industrieroboter.

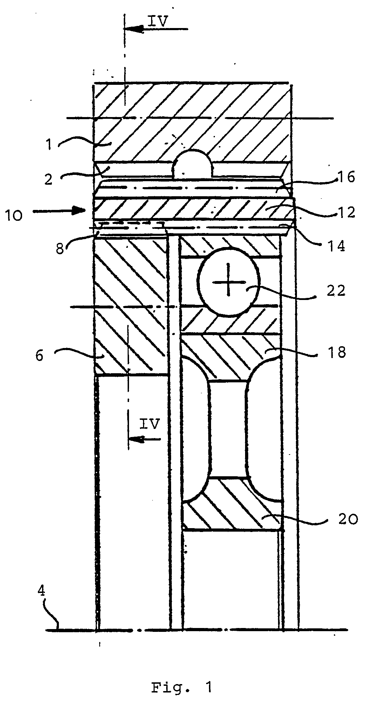

Fig. 1 zeigt in einem axialen Schnitt ein Planetengetriebe mit einem Hohlrad 1, das eine Innenverzahnung 2 aufweist. Koaxial zum Hohlrad 1 ist um die gemeinsame Zentralachse 4 drehbar ein Sonnenrad 6 mit einer Außenverzahnung 8 angeordnet. Radial zwischen dem Hohlrad 1 und dem Sonnenrad 6 ist ein ringförmiger Spalt 10 vorhanden, in welchem ein in radialer Richtung flexibles Planetenrad 12 mit einer Innenverzahnung 14 und einer Außenverzahnung 16 angeordnet ist. Axial direkt neben dem Sonnenrad 6 ist ein eine Antriebsnocke 18 aufweisender Drehkörper 20 vorhanden, welcher über ein radial außenliegendes Wälzlager 22 das Planetenrad 12 abstützt. Das Hohlrad 1 und/oder das Planetenrad 12 übergreifen das bevorzugt radial innen angeordnete Sonnenrad 6, die Antriebsnocke 18 und das Wälzlager 22. Wie nachfolgend erläutert wird, sind über den Umfang verteilt insgesamt vier Eingriffszonen vorhanden, in welchen das Planetenrad 12 mit dem Hohlrad 1 und dem Sonnenrad 6 in Eingriff steht. Es ist hier der eine Eingriffsbereich von Planetenrad 12 und dem Sonnenrad 6 dargestellt, wobei die Innenverzahnung 14 des Planetenrades 12 mit der Außenverzahnung 8 des Sonnenrades 6 kämmt; in dieser Position ist die Außenverzahnung 8 des flexiblen Planetenrades 12 außer Eingriff mit der Innenverzahnung 2 des Hohlrades 1. Entsprechende Verhältnisse sind für die um 180° bezüglich der Zentralachse gedrehte Position vorhanden. Hingegen sind in den um 90 sowie 270° gegenüber der dargestellten Position verdrehten Positionen die beiden anderen Eingriffsbereiche definiert, in welchen die Außenverzahnung 8 des Planetenrades 12 mit der Innenverzahnung 2 des Hohlrades 1 kämmt; hierbei ist die Innenverzahnung 14 außer Eingriff mit der Außenverzahnung 8 des Stirnrades 6. Die Eingriffsbereiche werden mittels des Drehkörpers 20 durch die diametral gegenüberliegenden Antriebsnocken 18 und über das Wälzlager 22 dem Planetenrad 12 vorgegeben.

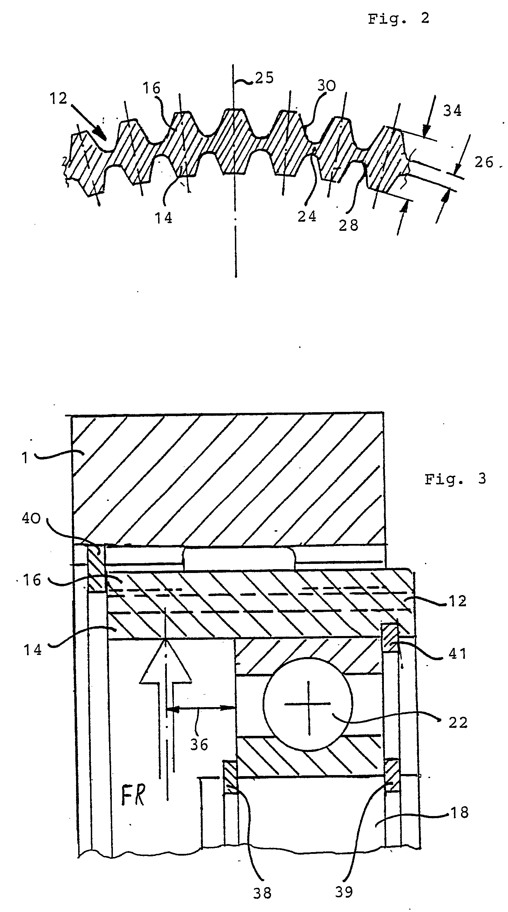

Fig. 2 zeigt in einem radialen Schnitt teilweise das in radialer Richtung flexible Planetenrad 12, welches dungsgemäß in Umfangsrichtung eine hohe Biegesteifigkeit aufweist. Die Zähne der Innenverzahnung 14 und der Außenverzahnung 16 sind bei dieser erfindungswesentlichen Ausgestaltung in den gleichen Axialebenen 25 angeordnet. Aufgrund der in radialer Richtung gegenüberliegenden Zähne ist ein hohes Flächenträgheitsmoment der Übertragungselemente erreicht und darüber hinaus wird durch die Verbindungsstege 24 in radialer Richtung zuverlässig eine gute Flexibilität des Planetenrades 12 gewährleistet. Die in radialer Richtung gemessene Dicke 26 der Verbindungsstege 24 wird den Erfordernissen entsprechend vorgegeben, wobei mit den beidseitig angebrachten Radien 28, 30 den Festigkeitsanforderungen optimal entsprochen wird.

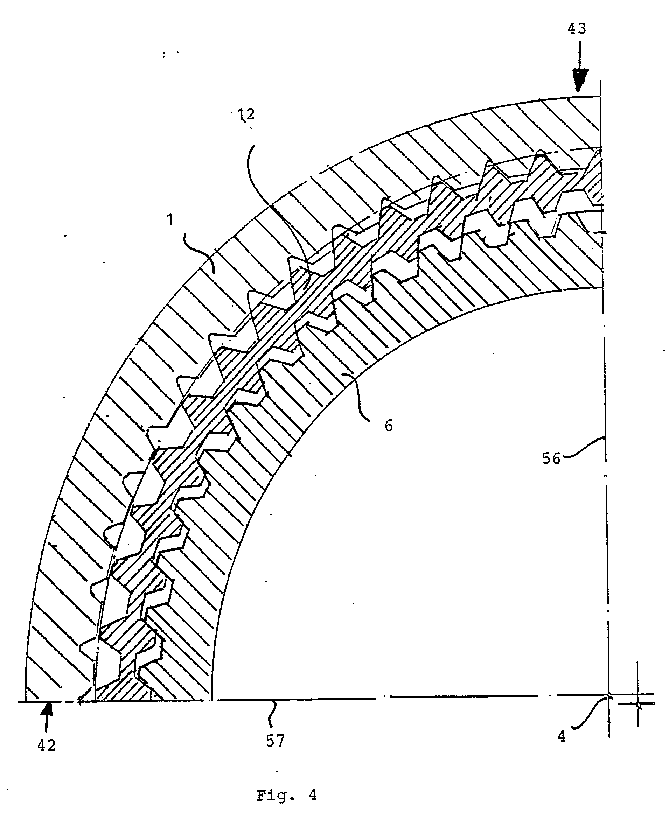

In Fig. 3 ist vergrößert ein axialer Schnitt eines weiteren Ausführungsbeispiels dargestellt, wobei das Sonnenrad nicht dargestellt ist. Die vor allem durch Radialkraft bedingte Kraftwirkung des Stirnrades ist durch den Pfeil FR angedeutet. Wie es sich aus der nachfolgenden Beschreibung ergibt, ist pro Eingriffsbereich der Anteil der tragenden Zähne groß und folglich ist die Biegebeanspruchung auf den einzelnen Zahn sehr klein. Darüber hinaus wird eine zusätzliche Versteifung in Umfangsrichtung des flexiblen Planetenrades aufgrund der insgesamt vier Lasteingriffsbereiche erreicht.

Das Widerstandsmoment des Planetenrades 12 ist aufgrund der großen Gesamthöhe 34 der jeweiligen Zähne der Innenverzahnung 14 und Außenverzahnung 16 sehr groß, wodurch das Antriebs- oder Wälzlager 22 sowie die Antriebsnocke außerhalb der Wirkungsrichtung der Kraft FR angeordnet werden können. Der axiale Abstand 36 zwischen der Wirkungsebene der Kraft FR und dem Wälzlager 22 kann klein gehalten werden, damit die Scherkräfte in der geforderten Weise größer sind als die Biegekräfte. Der innere Lagerring des Wälzlagers 22 ist axial mittels Federringen 38, 39 auf der Antriebsnocke 18 festgelegt. Die axiale Sicherung des Planetenrades 12 erfolgt mittels Sicherungs- bzw. Federringen 40, 41 bezüglich des Hohlrades 1 und des Wälzlagers 22.

Fig. 4 zeigt einen radialen Schnitt entlang Schnittlinie IV gemäß Fig. 1, wobei nunmehr zwei um 90° bezüglich der Zentralachse 4 versetzte Eingriffszonen 42, 43 zu erkennen sind. Links unten ist die Eingriffszone 42 und rechts oben die Eingriffszone 43. Die Eingriffszonen 42 und 43 erstrekken sich jeweils über verhältnismäßig große Winkelbereiche, so daß immer ein hoher Anteil der Zähne des Planetenrades 12 mit den zugeordneten Zähnen des Hohlrades 1 bzw. des Stirnrades 6 in Eingriff stehen. Die Biegebeanspruchung pro Zahn ist folglich sehr klein.

Das Planetengetriebe enthält, ähnlich dem eingangs erwähnten Gleitkeilgetriebe, kreisförmig ausgeführte und miteinander in Eingriff stehende Zahnräder, ohne daß abwälzungsfähige, also gekrümmte Zähne hierfür erforderlich sind. Mit dem Getriebe wird eine kinematische Gleichförmigkeit erreicht, wobei darüberhinaus Spiel- und Geräuscharmut praktisch ohne Hertz'sche Pressung erreicht werden. Das Getriebe mit den zwei ineinander angeordneten innen- und außenverzahnten Rädern, nämlich Hohlrad 1 und Sonnenrad 6, verbessert den ebenen, flächenhaften Gleitkontakt, wobei eine Flankenwinkeländerung überraschend vermieden und eine elastische Anpassung der Teilungsänderungen zuverlässig erreicht wird. Die maßgebenden kinematischen und geometrischen Zusammen hänge sollen nachfolgend ausführlich erläutert werden.

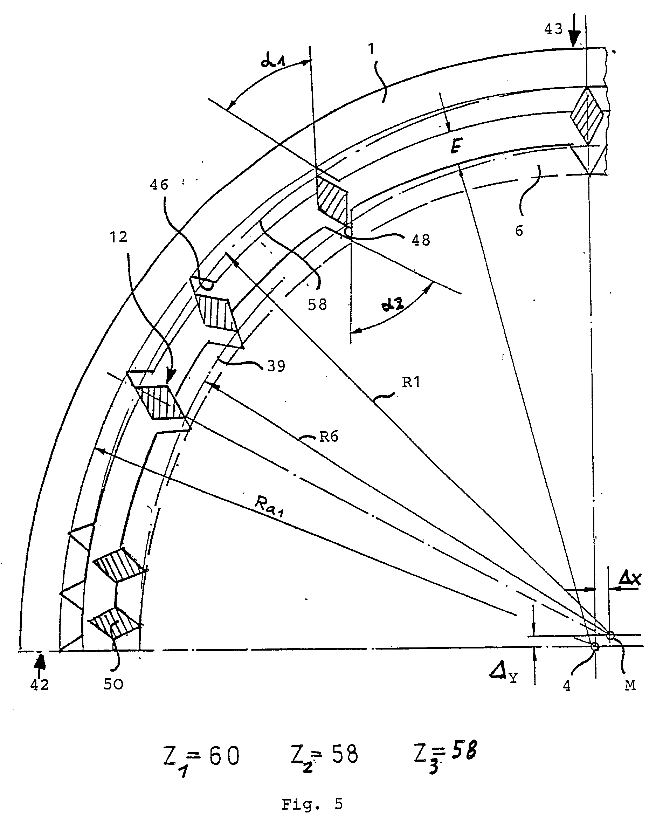

Fig. 5 zeigt schematisch ein Getriebe mit einem Untersetzungsverhältnis i = 1:30. Es sind nur einzelene Zähne und Zahnlücken in besonders wichtigen Lagen dargestellt. Das Hohlrad 1 enthält 60 Zähne, das Planetenrad 12 enthält 58 Zähne, das Sonnenrad 6 enthält 58 Zähne, so daß ein Untersetzungsverhältnis i = 1:30 vorhanden ist. Das Hohlrad 1 mit den Zahnlücken 46 und das Sonnenrad 6 sind koaxial zur Zentralachse 4. In den Eingriffszonen 42, 43 erfolgt auf den Fahrstrahlen F des jeweiligen einzelnen

5

Gesamtzahnes 50 des Plantenrades 12 eine Radialverschiebung mit konstanter Geschwindigkeit über eine vorausberechnete Kurve, deren Mittelpunkt M für den hier dargestellten Quadranten außerhalb derselben um die Beträge $\Delta x$ und $\Delta y$ von der Zentralachse 4 entfernt liegt. Für die drei anderen Quadranten werden die Mittelpunkte der jeweiligen Fahrstrahlen entsprechend der derart vorausberechneten Kurve vorgegeben.

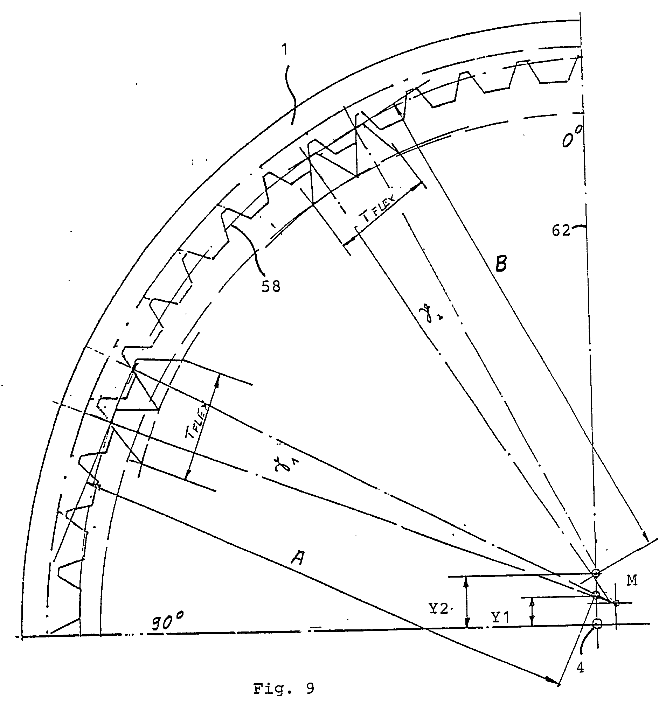

Die Fahrstrahlkurve 58, auf welcher die Zahnspitzen der Außenverzahnung des Planetenrades sich bewegen, wird durch den Radius R1 und die Fahrstrahlkurve 39, auf welcher die Zahnspitzen der Innenverzahnung des Planetenrades sich bewegen, wird durch den Radius R6 beschrieben, und zwar um den gemeinsamen Mittelpunkt M. Hierdurch wird gewährleistet, daß die radiale Geschwindigkeit der mit dem Hohlrad 1 jeweils kämmenden Zähne 50 identisch ist mit der Radialgeschwindigkeit der jeweils mit dem Sonnenrad 6 kämmenden Zähne. Die Flankenwinkel $\alpha 1$, $\alpha 2$ bleiben konstant, während sich die Zahnteilung längs der Fahrstrahlkurve ändert. Die Anpassung der Zähne 50 des flexiblen Planetenrades an die veränderliche Teilung wird anhand von Fig. 9 beschrieben. Die Durchmesser von Hohlrad 1 und Sonnenrad 6 sind so gewählt und ggf. korrigiert, daß eine Lücke E entsteht, welche größer ist als die halbe Zahnhöhe, und die Zähne 50 ungestört die Zahnlükken wechseln können!

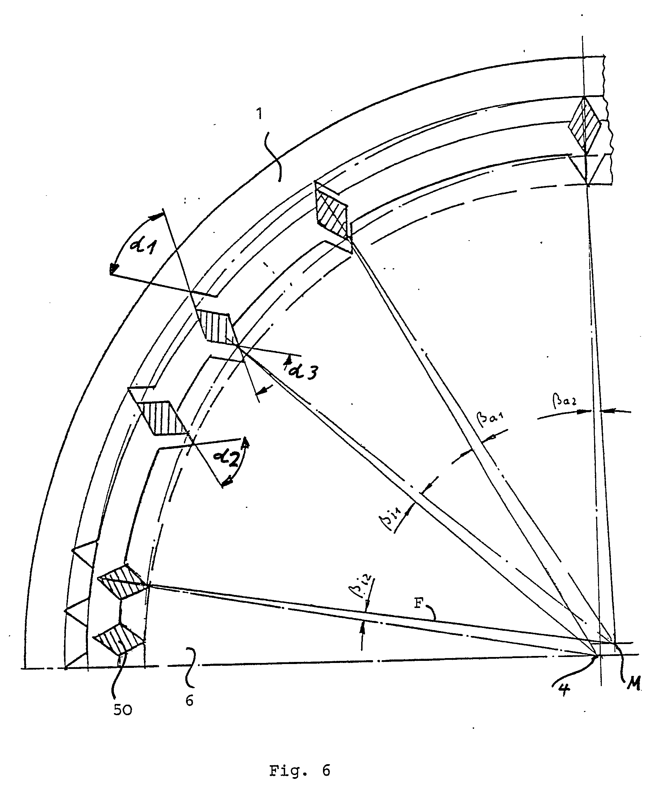

Fig. 6 entspricht weitgehend der Fig. 5, wobei jedoch aus Gründen der Übersichtlichkeit die einzelnen Bezugszeichen weggelassen und die Einlaufwinkel $\beta i$, $\beta a$ näher bezeichnet sind. Der Fahrstrahl F ist bezüglich einer durch die Zentralachse 4 verlaufenden Axialebene um den jeweiligen Einlaufwinkel $\beta i$ bzw. $\beta a$ versetzt. Es erfolgt in vorteilhafter Weise ein radiales Gleiten der Zähne 50 auf den jeweiligen in Eingriff stehenden Zahnflanken des Hohlrades 1 bzw. des Sonnenrades 6, ohne daß eine Wälzbewegung stattfindet. Der Wert der Einlaufwinkel $\beta i$, $\beta a$ sowie deren Änderung werden bei zunehmender Untersetzung kleiner. Der optimale Flankenwinkel $\alpha 3$ der Zähne des flexiblen Planetenrades ist um den zweifachen Wert des Winkels $\beta a$ bzw. $\beta i$ größer als die Winkel $\alpha 1$ bzw. $\alpha 2$ vom Hohlrad bzw. vom Sonnenrad. Bei Untersetzungen unterhalb von $i = 1{:}40$ können die Zähne des flexiblen Planetenrades mit einer leichten Evolventenkrümmung ausgeführt werden. Bei Untersetzungen oberhalb von $i = 1{:}40$ kann der Flankenwinkel $\alpha 3$ infolge der innerhalb der Fertigungstoleranzen liegenden Abweichungen in gleicher Größe wie die genannte Lückenwinkel $\alpha 1$ und $\alpha 2$ ausgebildet werden.

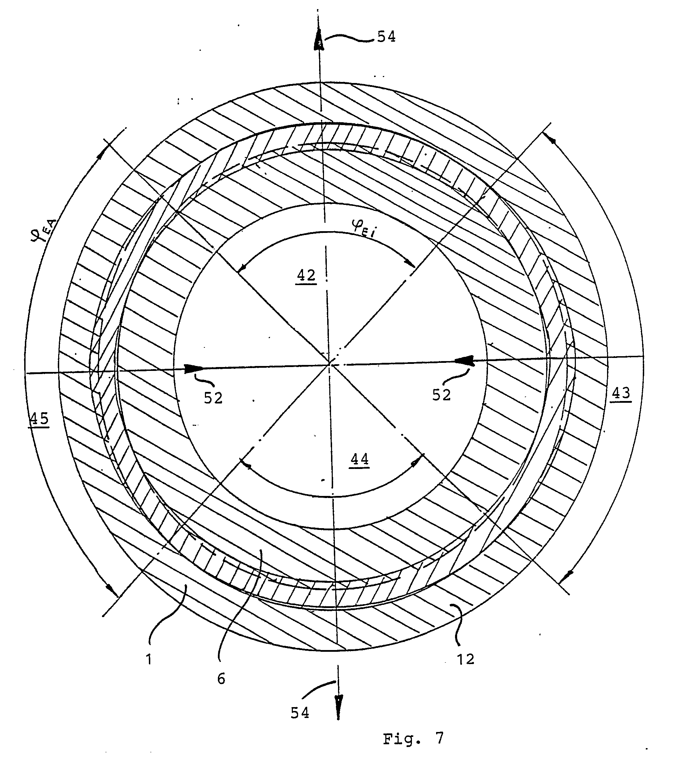

In Fig. 7 ist schematisch die Lage der insgesamt vier Eingriffszonen 42 bis 45 dargestellt, wobei die äußeren Eingriffszonen 43, 45 in das Hohlrad mit dem Winkel $\phi EA$ und die inneren Eingriffszonen 42, 44 mit dem Winkel $\phi EI$ bezeichnet sind. Aus Gründen der Übersichtlichkeit sind die Eingriffszonen 42 bis 45 jeweils $90^\circ$ groß dargestellt, doch ist praktisch eine erhebliche Überlappung aufgrund eines kontinuierlichen Übergangs vorhanden, wie es sich unmittelbar aus der Zeichnung ergibt. Durch Pfeile 52 sind die vom Hohlrad 1 nach innen gerichteten Rückstellkräfte auf das Planetenrad 12, und durch Pfeile 54 sind die vom Sonnenrad 6 nach außen gerichteten Kräfte auf das Planetenrad dargestellt. Das flexible Planetenrad 12 ist in Umfangsrichtung sehr steif. Eine Versteifung gegen axiale Zahnverbiegung ist durch die Zähne gegeben, die mit ihren gegenüberliegenden Flanken einerseits mit dem Hohlrad 1 und andererseits mit dem Sonnenrad 6 gleichzeitig kämmen, so daß die Biegekräfte sich gegenüberliegen und nahezu aufheben.

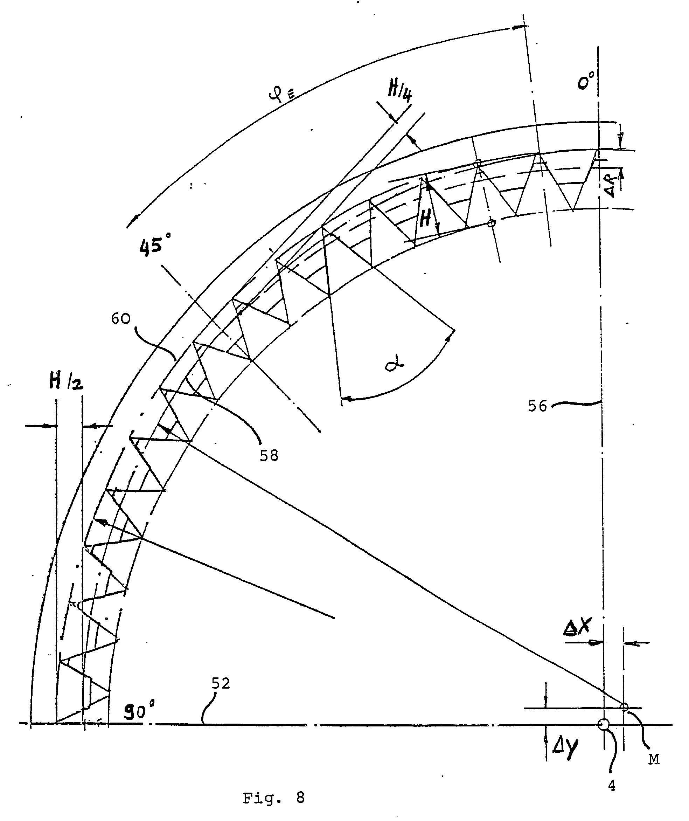

In Fig. 8 ist zur Erläuterung der Verzahnungsgeometrie das innenverzahnte Hohlrad 1 dargestellt. Unter Berücksichtigung des Flankenwinkels $\alpha$, der Zähnezahl und eines vorgegebenen Innendurchmessers errechnet sich die Zahnhöhe H und der Außendurchmesser. Bei einem Gleitkeilgetriebe, das zwei axial nebeneinanderliegende Hohlräder aufweist, sind sogenannte virtuelle Zahnlücken vorhanden, welche für eine Zähnezahldifferenz von zwei bei $180^\circ$ aus den Zahnreihen herauslaufen. Bei dem Planetengetriebe mit jeweils diametral gegenüberliegenden Eingriffsbereichen, müssen jedoch die Zähne des Planetenrades bereits nach einer Drehung um $90^\circ$ das Hohlrad bzw. das Sonnenrad verlassen haben. Es sind daher Korrekturen am Durchmesser des flexiblen Planetenrades sowie der Antriebsnocke vorgesehen. Für das Planetengetriebe wird eine konstante radiale Zahnverschiebung mit konstanter Geschwindigkeit vorgegeben, wobei der Mittelpunkt M der Fahrstrahlkurve in der dargestellten Weise bezüglich der Zentralachse 4 versetzt ist. Hierbei ist vorausgesetzt, daß in der Ebene 56 die Zähne des Planetenrades in die dreieckförmige Innenverzahnung des Hohlrades 1 vollständig eingreifen und nach $45^\circ$ von der Ebene 56 den Abstand zwischen der Fahrstrahlkurve 58 und der Spitzenkurve 60 den Wert H/4 aufweist. Nach $90^\circ$ weist der Abstand den Wert H/2 auf. Zum Freilaufen in der Ebene 57 nach einer $90^\circ$-Drehung bezogen auf die Ebene 56 wird der Innendurchmesser des Hohlrades entsprechend um einen Betrag vergrößert und der Außendurchmesser des flexiblen Planetenrades um einen Betrag reduziert, so daß jeder ein- oder auslaufende Zahn den Wechsel von der einen Zahnlücke in die andere schnell vornehmen kann. Durch diese wesentliche Maßnahme wird es möglich, daß bis zu 90 % der Zähne miteinander in zunehmendem Flächenkontakt stehen. Ferner ist von Bedeutung, daß im Vergleich mit einem GK- oder einem HD-Getriebe die Ovalisierung des Planetenrades nur in etwa den halben Wert aufweist. Das Planetengetriebe weist eine trapezförmige Verzahnung auf.

Anhand von Fig. 9 wird die Anpassung des flexiblen Planetenrades an unterschiedliche Zahnteilungen im Eingriffsbereich erläutert. Der Schnittpunkt der Fahrstrahlkurve 58 mit den Zahnflanken ergibt im Eingriffsbereich Teilungsunterschiede, die jedoch recht gering sind. Eine Selbstanpassung ohne nennenswerten Zwang erfolgt dadurch, daß die relative Krümmungsänderung der Fahrstrahlkurve 58 bezogen auf die Hauptachse 4 Schnittpunkte Y1 und Y2 erzeugt, für welche unterschiedliche Radien A und B gegeben sind. Da im Zahnfuß des Planetenrades die Krümmung konstant bleibt und der Winkel $\gamma1$ sich auf $\gamma2$ vergrößert, entfernen sich die Zahnspitzen voneinander. Durch Abstimmung von Zahnwinkel, Eingriffszone und Zahnhöhe erfolgt eine Anpassung an die Teilungsänderung, ohne daß hierbei nennenswerte Zusatzbelastungen auftreten. Der Innen- und der Außendurchmesser vom Hohlrad 1 und Sonnenrad 6 sind zwecks Reduzierung der Ovalisierung und/oder der Materialwechselbeanspruchung des flexiblen Planetenrades so wie des Wälzlagers korrigiert. Die Fahrstrahlkurve 58 ist im Schnittpunkt mit der Ebene 57 im wesentlichen gleich groß wie der Innendurchmesser des Hohlrades; entsprechendes gilt für den Außendurchmesser des Stirnrades. Die Zahnspitzen der Zähne des Planetenrades und/oder des Hohlrades 1 und/oder des Stirnrades 6 sind abgeflacht und weisen einen trapezförmigen Querschnitt auf.

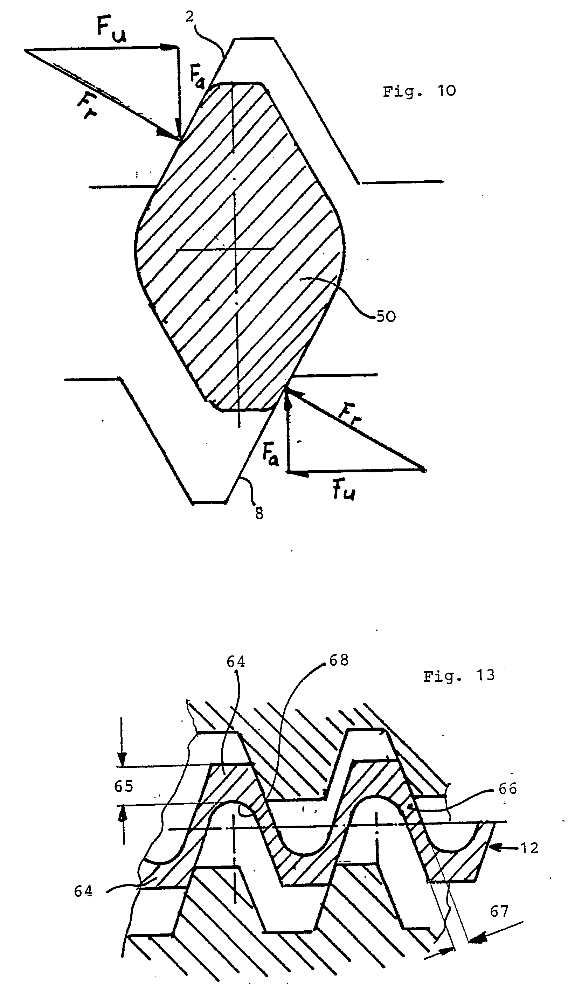

Fig. 10 zeigt vergrößert einen massiv ausgebildeten Einzelzahn 50, der in Kontakt mit der Innenverzahnung 2 des Hohlrades 1 und der Außenverzahnung 8 des Stirnrades steht. Es sind die in Umfangsrichtung wirkenden Kräfte Fu und die in radialer Richtung wirkenden Kräfte Fa eingetragen. Die resultierenden Kräfte Fr bewirken in diesem Falle in erster Linie eine Beanspruchung des Einzelzahnes 50 auf Torsion.

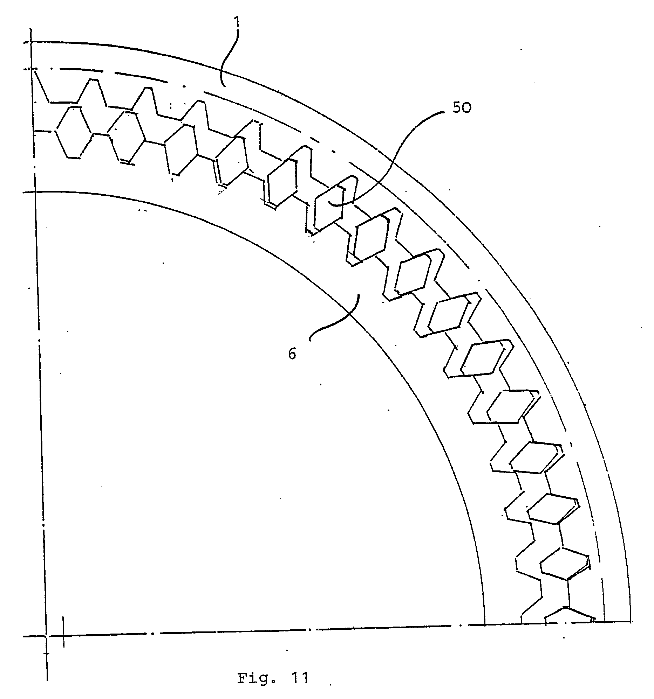

Fig. 11 zeigt eine Ausführungsform ähnlich der gemäß Fig. 4, wobei jedoch im Bereich des Stirnrades 6 zwischen den Gesamtzähnen keine Stege gezeichnet sind. Im Bereich der Antriebsnocke sind hingegen die Zähne ebenso wie bei der Ausführungsform von Fig. 4 miteinander verbunden. Die einzelnen Zähne 50 sind von der einen Stirnseite des flexiblen Planetenrades her in dieses, insbesondere durch Einfräsen, eingebracht worden. Daher können ggfs. Ungenauigkeiten ausgeglichen oder größere Fertigungstoleranzen zugelassen werden.

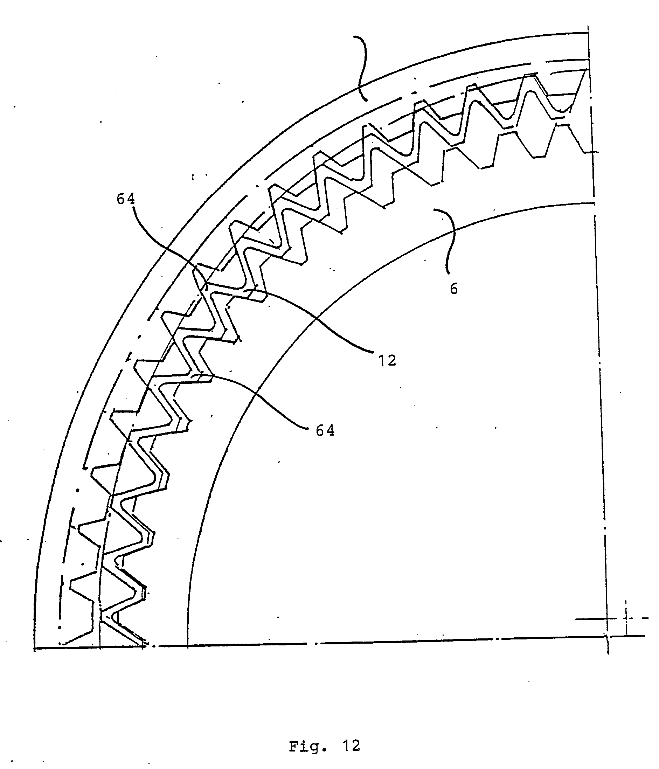

In Fig. 12 ist eine besondere Ausgestaltung mit einem auch in Umfangsrichtung flexiblen Zahnring bzw. Planetenrad 12 dargestellt. Die Zähnezahldifferenz des Hohlrad 1 gegenüber dem Planetenrad 12 beträgt höchstens plus zwei, während das Planetenrad 12 gegenüber dem Sonnenrad 6 eine Differenz von minus zwei aufweist. Die Gesamt-Zähnezahldifferenz hat den Wert vier, so daß eine Halbierung der Übersetzung erfolgen kann, ohne daß die kinematische Geometrie des Getriebes geändert wird. Man kann in besonders einfacher Weise durch Austausch des Hohlrades 1 oder des Stirnrades 6, welches dann die gleiche Zähnezahl wie das Planetenrad 12 aufweist, die Übersetzung von beispielsweise i = 1:30 auf i = 1:15 verändern. Ferner wird bei dieser Ausführungsform mit dem auch in Umfangsrichtung flexiblen Zahnring die Anpassung an die oben anhand von Fig. 9 erläuterte Teilungsänderung erreicht. Schließlich wird infolge der hohen Anzahl der tragenden Zähne sowie der parallelen Zahnführung die Breite des Hohlrades ebenso wie des Stirnrades sehr klein gehalten.

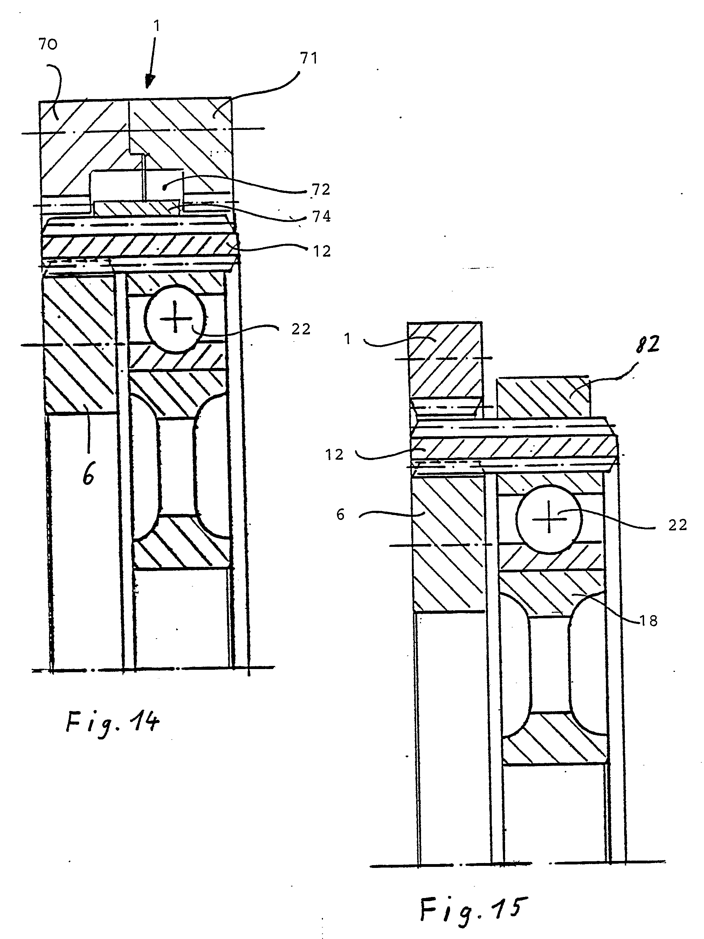

Fig. 13 zeigt vergrößert das auch in Umfangsrichtung flexible Planetenrad 12, bei welchem die Zahnköpfe 64 mit der radialen Höhe 65 relativ steif ausgebildet sind. Die Flexibilität wird durch die Bereiche 66 erreicht, die zwischen den äußeren und inneren Zahnköpfen 64 vorhanden sind, die die Dicke 65 aufweisen und die in jeweils innere Abrundungen 68 der Zahnköpfe 64 übergehen. Diese besondere Ausgestaltung ergibt bei der Ovalisierung mittels der Antriebsnocke kaum Rückstellkräfte und weist bei Lasteingriff eine außerordentlich hohe Steifigkeit auf. Die Zahnhöhe 65 ist hier wenigstens doppelt so groß wie die Dicke 67 des Steges 66.

Gemäß der Fig. 14 besteht das Hohlrad 1 aus zwei Teilen 70, 71, die drehfest miteinander verbunden sind. Im Unterschied zur Ausführungsform von Fig. 1 weist das Hohlrad 1 in der Mitte eine Aussparung 72 auf. Innerhalb dieser Aussparung 72 ist mit kleinem Spiel auf das Planetenrad 12 ein dünnwandiger, glatter Ring 74 geschoben. Dieser Ring 74 nimmt die auf das Planetenrad 12 einwirkenden Zugkräfte weitgehend auf und erhöht die Biegesteifigkeit des Planetenrades. Der dünnwandige Ring 74 weist in radialer Richtung eine gute Flexibilität auf.

In Fig. 15 ist eine Ausführungsform angegeben, bei welcher das Planetenrad 12 axial über das Hohlrad 1 und das Stirnrad 6 verlängert ist. Im Bereich der Antriebsnocke 18 und des Wälzlagers 22 ist radial außen um das Plantenrad 12 ein Ring 82 angeordnet. Dieser Ring 82 dient zur Aufnahme von Zug-und Biegekräften.

Fig. 16 zeigt eine Ausführungsform die im unteren Zahnbereich des Planetenrades 12 das Wälzlager 22 aufweist. Die Lücke zwischen dem Hohlrad 1 und dem Stirnrad 6 ist kleiner als bei der Ausführungsform mit Stegzähnen. Ferner stützt sich ein Wälzlager, z. B. das Rollenlager direkt auf dem zylindrischen Lager des flexiblen Planetenrades 12 ab. Wie in Fig. 11 stehen einzelne Zähne 50 axial vom zylindrischen Teil des Rades 12 ab.

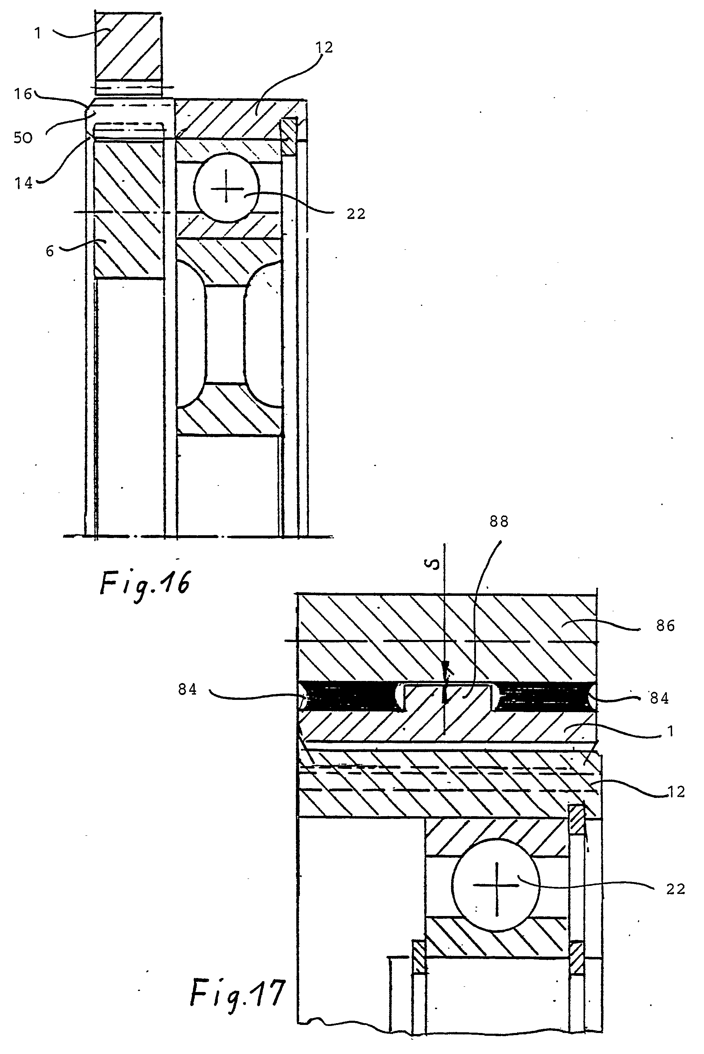

Fig. 17 zeigt eine Ausführungsform, bei der das Sonnenrad nicht dargestellt ist. Hierbei ist das Hohlrad 1 in Umfangsrichtung ebenfalls flexibel ausgebildet und mittels elastischen Elementen 84 mit einem massiven Ring 86 verbunden. Insbesondere sind die elastischen Elemente 84 als Gummiringe ausgebildet, mittels welchen das Hohlrad 1 in den massiven Ring 86 einvulkanisiert ist. Das Hohlrad 1 hat in der Mitte einen Steg 88, der zur Begrenzung der Ovalisierung bei Last dient. Diese Ausführungsform zeichnet sich ferner dadurch aus, daß der Innendurchmesser der Verzahnung etwas kleiner gehalten werden kann, wodurch Spielfreiheit und auch eine Vorspannung zum flexiblen Zahnring bzw. Planetenrad 12 gewährleistet wird. Die Ovalisierung erfolgt durch das Planetenrad 12, wobei schon ca. 10 % der Ovalisierungsgröße des Zahnringes ausreichen, die ohne Probleme von der Gummierung aufgenommen werden. Diese Ausführungsform hat darüber hinaus den wesentlichen Vorteil, daß über die Elemente 84 Stöße gedämpft werden und das Getriebe sich insgesamt durch eine außerordentliche Geräuscharmut auszeichnet.

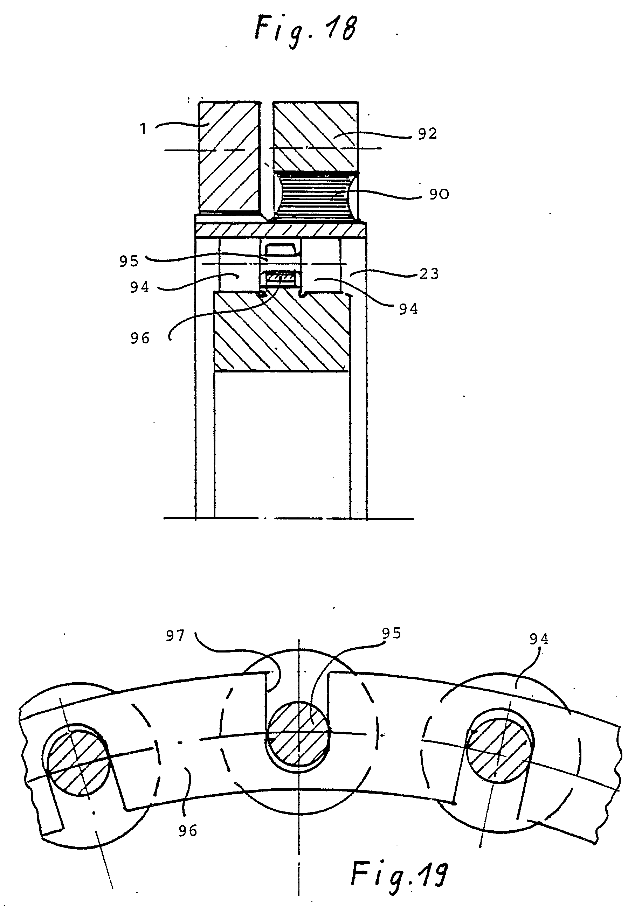

Fig. 18 zeigt eine Ausgestaltung eines Getriebes, bei welchem das Planetenrad 12 über ein, insbesondere ringförmig ausgebildetes elastisches Element 90 mit einem unverzahnten Ring 92 verbunden ist. Auch hier erfolgt die Verbindung des elastischen Elementes 90 mit dem Planetenrad 12 und dem äußeren Ring 92 durch Vulkanisierung. Das elastische Element 90 ist sowohl in Längs- als auch in Umfangsrichtung elastisch. Zur Vermeidung von Biegekräften auf das Planetenrad 12 ist auch im Bereich innerhalb des elastischen Ringes 90 ein Wälzlager 23 vorgesehen, welches naturgemäß nur durch vergleichsweise gering Rückstellkräfte des elastischen Elementes 90 beaufschlagt wird. Das Wälzlager 23 enthält über einen Steg 95 gekoppelte Doppelrollen 94, die in der Mitte einen Steg 95 aufweisen. Zur Führung der Rollen 94 ist im Bereich des Steges 95 ein Käfig 96 vorgesehen.

Fig. 19 zeigt vergrößert einen Teil des Wälzlagers 23 gemäß der Fig. 18. Der Steg 95 weist abwechselnd radial von innen bzw. radial von außen geöffnete Schlitze 97 auf, in welchen die Doppelrollen 94 mit ihren Stegen 95 eingeführt sind. Die Rollen 94 können sich bei dieser besonderen Ausgestaltung ungehindert in radialer Richtung bewegen, ohne daß der Käfig 96 zusätzlich verformt wird.

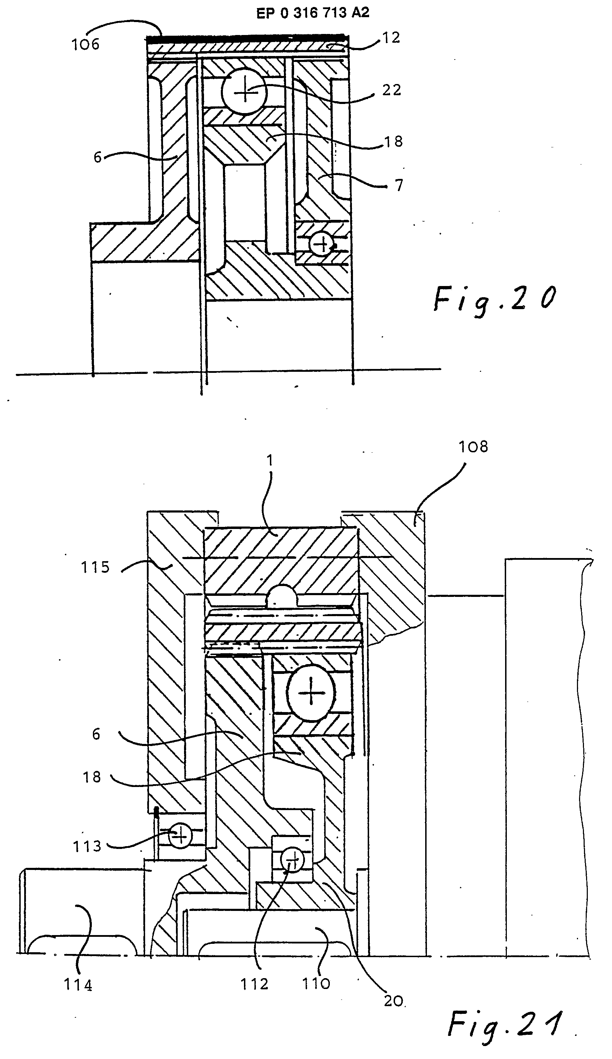

Fig. 20 zeigt eine Ausführungsform mit zwei Sonnenrädern 6, 7, welche unterschiedliche Außenverzahnungen aufweisen, in welche das radial außen liegende Planetenrad 12 mit seinen Verzahnungen eingreifen kann. Das Planetenrad 12 ist außen von einem dünnwandigen Federring 106 umgeben, der vor allem zur Aufnahme von Zugspannungen dient. Der Drehkörper 20 mit den Antriebsnocken 18 ist axial zwischen dem Sonnenrad 6 und dem Sonnenrad 7, die als Scheiben ausgebildet sind, angeordnet. Auch das Wälzlager 22 befindet sich axial zwischen den Sonnenrädern 6, 7. Diese Ausführungsform zeichnet sich besonders durch einen geringen Außendurchmesser aus.

Fig. 21 zeigt eine Anordnung in Verbindung mit einem Getriebemotor. Das Hohlrad 1 wird direkt an den Motor 108 angeflanscht, während der Drehkörper 20 mit den Antriebsnocken 18 über eine Paßfeder mit der Motorwelle 110 gekoppelt ist. Das Stirnrad 6 ist über ein Lager 112 auf der Motorwelle 110 abgestützt. Ein Gehäusedeckel 115 ist über das Hohlrad 1 mit dem Motorgehäuse 108 verschraubt und weist radial innen ein weiteres Lager 113 auf, in welchem das Stirnrad 6 sowie ein mit diesem verbunder Wellenzapfen 114 gelagert ist. Der Gehäusedeckel 115 ist das einzige zusätzliche Bauteil. In dieser Anordnung ist die ursprüngliche, durch die Motorwelle 110 vorgegebene Länge durch das Getriebe nur entsprechend dem Wellenzapfen 114 verlängert. Dieser Getriebemotor zeichnet sich daher durch eine äußerst kompakte Bauweise aus.

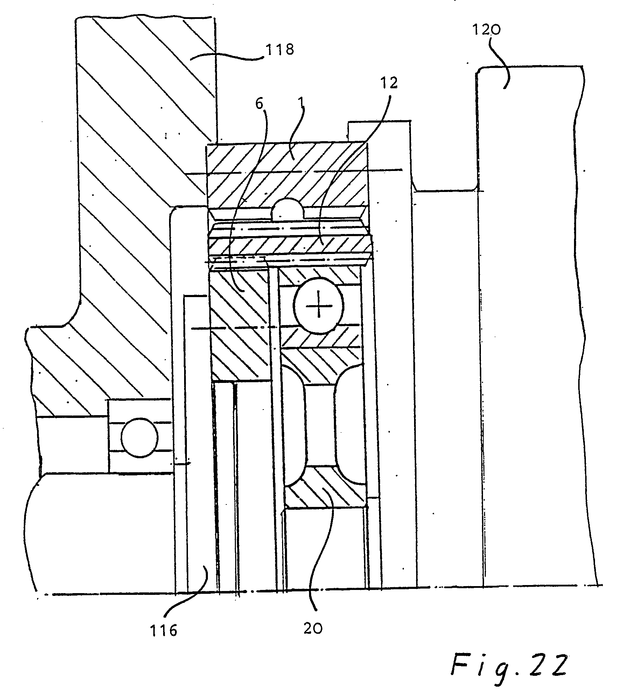

In Fig. 22 ist eine Anordnung des anhand von Fig. 1 erläuterten Getriebes für einen Industrie-Roboter gezeigt. Die Lagerung des Stirnrades 6 erfolgt über eine Welle 116 im Gehäuseteil 118 des Roboters. Der Antriebsmotor 120 ist direkt an das Hohlrad 1 geflanscht und ist ebenfalls mit dem Gehäuse 118 verschraubt. Bei dieser Ausgestaltung sind zum Anflanschen keine Zusatzmassen erforderlich. Eine mögliche erhebliche Reduzierung der Gesamtmasse des Getriebes ist besonders vorteilhaft im Hinblick auf schnelle Schwenkbewegungen und die hierbei auftretenden Beschleunigungskräfte.

Aus den beiden nachfolgenden Zahlenbeispielen wird die erfindungsgemäß mögliche Realisierung hoher und höchster Untersetzungen ersichtlich, wobei mit i1 bzw. i2 das Untersetzungsverhältnis zwischen dem flexiblen Planetenrad und dem Hohlrad bzw. dem Stirnrad bezeichnet wird:

| I: | $i1 = 1{:}102$ | $i2 = -1{:}100$ | i-gesamt $= 1{:}10.200$ |
|----|----------------|-----------------|--------------------------|
| II. | $i1 = 1{:}100$ | $i2 = -1{:}130$ | i-gesamt $= 1{:}419$ |

Da die beiden Zahnreihen durch eine gemeinsame Antriebsnocke beaufschlagt werden, ist eine gemeinsame Einlaufkurve bzw. Fahrstrahlkurve vorgegeben. Diese errechnet sich aus der Untersetzung und dem Flankenwinkel, wie es vorstehend erläutert wurde. Für die beiden Zahnreihen mit abweichender Untersetzung kann die Vorgegebene Kurve durch Änderung der Flankenwinkel $\alpha$ unter Berücksichtigung der Zahnhöhe vorgegeben werden, wobei nachfolgende Gleichung gilt.

tg $(\alpha1\ /2)$: tg $(\alpha2\ /2) = i2{:}i1$

Aufgrund dieser wesentlichen Zusammenhänge wird für einen Flankenwinkel $\alpha 1$ /2 die Hälfte von $\alpha 1$ ) von 20° der Flankenwinkel $\alpha 2$ /2 von 15° vorgegeben. Für das Beispiel I ist keine Korrektur notwendig.

Bezugszeichenliste

1 Hohlrad
2 Innenverzahnung
4 Zentralachse
6, 7 Sonnenrad
8 Außenverzahnung
10 Spalt
12 Planetenrad
14 Innenverzahnung
16 Außenverzahnung
18 Antriebsnocke
20 Drehkörper
22, 23 Wälzlager
24 Verbindungssteg
25 Axialebene
26 Dicke
28, 30 Radius
34 Höhe
36 axialer Abstand
38-41 Federring
42-45 Eingriffszone
46 Zahnlücke von 1
48 Zahnlücke von 6
50 Gesamtzahn von 12
52, 54 Pfeil
56, 57 Ebene
58 Fahrstrahlkurve
60 Spitzenkurve
62 Hauptachse
64 Zahnkopf
65 Höhe von 64
66 Bereich
67 Dicke von 66
68 Abrundung
70, 71 Teil von 1
72 Aussparung
74 Ring
78 Wälzlager
80 Antriebsring
82 Ring
84 elastisches Element
86 massiver Ring
88 Steg
90 elastisches Element
92 unverzahnter Ring
94 Doppelrolle
95 Steg
96 Käfig
97 Schlitz
100, 102 Nockenscheibe
103 Hohlrad
104 zylindrischer Bereich

106 Federring
108 Motorgehäuse
110 Motorwelle
112, 113 Lager
114 Wellenzapfen
115 Gehäusedeckel
116 Flanschwelle
118 Gehäuse
120 Antriebsmotor

**Ansprüche**

1. Planetengetriebe mit einem außen verzahnten Sonnenrad (6), das mit einem in radialer Richtung flexiblen Planetenrad (12) kämmt, mit einem Hohlrad (1), das mit dem Planetenrad (12) in Eingriff steht, und mit einer drehbar gelagerten Antriebsnocke, mittels welcher über ein Wälzlager (22) das Planetenrad (12) in radialer Richtung derart deformierbar ist, daß es in Eingriffszonen in die Verzahnungen des Hohlrades (1) und des Sonnenrades (6) hineingedrückt wird, dadurch gekennzeichnet, daß das flexible Planetenrad (12) eine Innenverzahnung (14) und eine Außenverzahnung (16) aufweist und zumindest teilweise in einem ringförmigen Spalt (10) zwischen dem Hohlrad (1) und dem Sonnenrad (6) angeordnet ist, und daß in bevorzugt vier in Umfangsrichtung verteilten Eingriffszonen (42 bis 45) die Außenverzahnung (16) des Planetenrades (12) mit der Verzahnung des Hohlrades (1) kämmt und die Innenverzahnung (14) da Planetenrades (12) mit der Verzahnung des Stirnrades (6) kämmt.

2. Planetengetriebe nach Anspruch 1, dadurch gekennzeichnet, daß das Sonnenrad (6), das Planetenrad (12) und das Hohlrad (1) jeweils nur ebene Zahnflanken aufweisen daß um einen Winkel von 90° versetzt zu einem maximalen Zahneingriff zwischen dem Hohlrad (1) und Planetenrad (12) der Kopfkreis des Hohlrades (1) größer ist als der dort vorhandene Kopfkreisdurchmesser des Planetenrades (12) und daß der Mittelpunkt (M) die Bewegungsbahn eines Punktes des Planetenrades (12) in einem Viertel eine Eingriffszone (42 bis 45) definiert und daß der maximale Zahneingriff des Planetenrades (12) mit dem Sonnenrad (6) in einer anderen Drehwinkelstellung vorliegt als der maximale Zahneingriff des Planetenrades (12) mit dem Hohlrad (1).

3. Planetengetriebe nach Anspruch 1 oder 2, dadurch gekennzeichnet, daß die Antriebsnocke (18) und das Wälzlager (22, 78) axial neben dem Stirnrad (6) und/oder axial neben dem Hohlrad (1) angeordnet sind, und daß das Planetenrad (12) axial sowohl das Wälzlager (22) als auch das Stirnrad (6) oder das Hohlrad (1) übergreift.

4. Planetengetriebe nach einem der Ansprüche 1 bis 3, dadurch gekennzeichnet, daß die Zähne der Innenverzahnung (14) und der Außenverzahnung (16) des Planetenrades (12) jeweils in den gleichen Axialebenen (25) angeordnet sind und mittels Verbindungsstegen (24) in Umfangsrichtung miteinander verbunden sind und/oder daß die radiale Gesamthöhe der Zähne der beiden Verzahnungen (14, 16) des Planetenrades größer ist als die radiale Dicke (26) der Verbindungsstege (24).

5. Plantengetriebe nach Anspruch 1 oder 4, dadurch gekennzeichnet, daß das flexible Planetenrad (12) einen scheibenförmigen Teil aufweist, von welchem einzelne Zähne (50) in axialer Richtung abstehend angeordnet sind.

6. Plantengetriebe nach Anspruch 1 oder 5, dadurch gekennzeichnet, daß das flexible Planetenrad (12) in Umfangsrichtung abwechselnd nach innen bzw. nach außen gerichtete Zahnköpfe (64) aufweist welche durch stegförmige Bereiche (66) miteinander verbunden sind, wobei die radiale Höhe der Zahnköpfe (b4) bevorzugt größer ist als die Breite der Bereiche (66) in Umfangsrichtung.

7. Plantengetriebe nach einem der Ansprüche 1 bis 5, dadurch gekennzeichnet, daß das flexible Planetenrad (12) insbesondere zur Aufnahme von Zugspannungen, von einem dünnwandigen und/oder flexiblen Ring (74) umgeben ist, wobei der Ring (74) bevorzugt in einer Ausnehmung (72) des Hohlrades (1) angeordnet ist.

8. Planetengetriebe, insbesondere nach einem der Ansprüche 1 bis 7, dadurch gekennzeichnet, daß das Hohlrad (1) und/ oder das Sonnenrad (6) mittels eines elastischen Elements (84) auf einem massiven Ring (86) abgestützt sind.

9. Planetengetriebe nach einem der Ansprüche 1 bis 8, dadurch gekennzeichnet, daß das flexible Planetenrad (12) mit den Zahnköpfen direkt auf dem Innenring und/oder Außenring des Antriebs- bzw. Wälzlagers (22, 78) abgestützt ist.

10. Planetengetriebe nach einem der Ansprüche 1 bis 9, dadurch gekennzeichnet, daß das flexible Plantenrad (12) in radialer Richtung und in Umfangsrichtung flexibel ausgebildet ist, wobei die Höhe (65) der Zahnköpfe (64) wenigstens doppelt so groß ist wie die Dicke (67) des Bereiches (66) zwischen den einzelnen Zahnköpfen (64).

11. Planetengetriebe nach einem der Ansprüche 1 bis 10, dadurch gekennzeichnet, daß die im wesentlichen mit ebenen Zahnflanken ausgebildeten Verzahnungen des Hohlrades (1) und/oder des Sonnenrades (6) im Außendurchmesser und/oder Innendurchmesser derart korrigiert sind, daß der Innendurchmesser des Hohlrades (1) und/oder der Außendurchmesser des Stirnrades (6) die um 90° versetzten Ebenen (57, 56) im wesentlichen gemeinsam mit der zugehörenden Fahrstrahlkurve (58) schneiden.

Fig. 1

Fig. 2

Fig. 3

Fig. 4

$$Z_1 = 60 \qquad Z_2 = 58 \qquad Z_3 = 58$$

Fig. 5

Fig. 6

Fig. 7

Fig. 8

Fig. 9

Fig. 10

Fig. 13

Fig. 11

Fig. 12

Fig. 14

Fig. 15

Fig.16

Fig.17

*Fig. 18*

*Fig. 19*

Fig.20

Fig.21

Fig.22